# EUROPÄISCHE PATENTSCHRIFT

(11) **EP 1 117 846 B1**
(45) Veröffentlichungstag und Bekanntmachung des Hinweises auf die Patenterteilung: **11.12.2002**
(21) Anmeldenummer: 99942697.6
(22) Anmeldetag: 22.09.1999
(51) Int. Cl.: C21D 1/09, C21D 9/00, B23K 35/32, B21B 27/00, C21D 9/38

(54) **VERFAHREN ZUR ÄNDERUNG DER EIGENSCHAFTEN VON WERKSTÜCKOBERFLÄCHEN**
METHOD FOR CHANGING THE PROPERTIES OF THE SURFACES OF WORK PIECES
PROCEDE POUR MODIFIER LES PROPRIETES DE SURFACES DE PIECES

(30) Priorität: 28.09.1998 US 102322 P
(43) Veröffentlichungstag der Anmeldung: 25.07.2001
(73) Patentinhaber: RUAG Munition, 3602 Thun (CH)
(72) Erfinder: STEINHOFF, Kurt, CH-6463 Bürglen (CH); SCHULEIT, Nathalie, CH-6207 Nottwil (CH)
(74) Vertreter: Frauenknecht, Alois J.
(86) Internationale Anmeldenummer: CH9900451
(87) Internationale Veröffentlichungsnummer: WO00018971

(56) Entgegenhaltungen:
- EP-A- 0 271 469
- EP-A- 0 396 114
- WO-A-95/07774
- DE-A- 19 529 429
- DE-A- 19 650 258
- US-A- 4 179 316
- US-A- 4 495 255
- PAUL H ET AL: "LASERTECHNOLOGIEN ZUR OBERFLACHENBEHANDLUNG VON VERSCHLEISSBEANSPRUCHTEN MASCHINENBAUTEILEN" STAHL UND EISEN,DE,VERLAG STAHLEISEN GMBH. DUSSELDORF, Bd. 114, Nr. 1, Seite 39-42 XP000425959 ISSN: 0340-4803

## Beschreibung

Die vorliegende Erfindung bezieht sich auf ein Verfahren zur gezielten partiellen Änderung der physikalischen und/oder technischen Eigenschaften von Werkstückoberflächen und auf anwendungen des Verfahrens.

In der DE-A1-196 50 258 ist ein Verfahren zur lokalen Modifikation von Werkstoffeigenschaften, durch verschiedene Arten des Laserlegierens beschrieben. Bevorzugt erfolgt die Zuführung der Legierungskomponenten in Form eines Drahtes, Stabes oder Röhrchens. Neben einer Vielzahl von geeigneten Komponenten sind auch Titan, Ti-Legierungen und Keramik genannt. Als Laserquellen dienen CO₂-Laser und Nd:YAG-Laser.

Bekannt ist auch eine Walze hoher Standzeit (EP -A2- 396 114), insbesondere geeignet zum Transfer von flüssigen Stoffen, wie Druckfarben etc. Diese Walze besteht aus einer Stahlwelle, die mit einer Keramikschicht versehen, eine Vielzahl von Kratern aufweist, in die Flüssigkeit eingelagert wird und diese beispielsweise auf ein Druckwerk überträgt. Die Keramik- oder auch Metalloxidschicht wird in konventioneller Weise, z.B. durch ein Plasmaverfahren aufgetragen; die Krater sind durch ein Auf- und Umschmelzen mittels eines CO₂-Lasers erzeugt. Die Oberfläche der Walze wird nach der Laserbearbeitung überschliffen und erfährt eine Feinbearbeitung (Superfinishing); die Ränder der Krater werden somit entfernt. Die mechanischen Eigenschaften der Walzenoberfläche sind gegenüber einer üblichen beschichteten Oberfläche nahezu identisch. Das Laserverfahren ist lediglich zur Materialabtragung verwendet und dient in Verbindung mit einer Zuführung von Druckfarben, zur Bildung von "wells" (Quellen, bzw. Einlagerstellen) in der Walze.

Aus der DE -A1- 195 29 429 sind ein Feinblech, eine Walzwerkswalze für die Feinblech-Herstellung, sowie ein Verfahren zu Oberflächen-Strukturierung der Walzwerkswalze und deren Verwendung bekannt. Zur Verbesserung der Oberflächenstruktur von Feinblechen, der Umformbarkeit und deren Erscheinungsbild wird eine sogenannte stochastisch-deterministische Rauheitsstruktur erzeugt. Hierzu wird vorgeschlagen eine Walzwerkswalze zuerst durch Wirbelstrahlen oder durch Funkenerosion mit einer stochastischen Grundstruktur zu versehen und dann mit Laser- oder Elektronenstrahlbearbeitung eine deterministische Struktur zu überlagern, womit auch die tribologischen Verhältnisse bei späteren angewendeten Umformprozessen verbessert werden.- Verfahrensparameter sind nicht aufgeführt, statt dessen sind erzielte Rauhigkeits- und Geometriekenngrössen für Walzen- und für Feinblechoberflächen aufgelistet.

Dieser Gegenstand ist auf die Festlegung von Oberflächenstrukturen beschränkt. Es ist kein Umschmelzen oder Legieren von Oberflächen beabsichtigt; die Materialeigenschaften der Walzenoberflächen bleiben erhalten oder werden nur geringfügig modifiziert.

Im weiteren ist ein Verfahren zur Herstellung von Feinblechen und Bändern bekannt (WO 95/07774), nach welchem eine Texturierung durch Tandem-Walzen erzeugt wird. Die resultierende Oberflächenstruktur soll deterministisch sein und die Form von Kraterringen aufweisen. Hierzu wird jeweils eine Prägewalze in regelmässigen Abständen, nach einem vorgegebenen Muster, durch einen Elektronenstrahl, im Vakuum aufgeschmolzen, derart, dass gegenüber der Walzenoberfläche vertiefte Krater mit gegenüber diesem erhabenem Rand entstehen. Die erzielte Texturierung dient der Verhinderung von Kaltschweissungen bei der Wärmebehandlung (Glühen) und der verbesserten Haftung von Beschichtungen. Dafür wird eine Elektronenkanone eingesetzt, die auf eine in eine Vakuumkammer verbrachte Walze einwirkt.

Die Auslegung und Gestaltung von Werkstücks-, insbesondere von Werkzeugoberflächen ist abhängig von den Prozessbedingungen und den Funktionsanforderungen des jeweiligen, meist Umformprozesses. Dabei wird aus wirtschaftlichen Gründen grosser Wert auf eine hohe Standzeit der Werkzeuge und damit auf eine maximale Verschleissfestigkeit gelegt. Untersuchungen (Schmoeckel, Prier and Staeves: Topography deformation of sheet metal during the forming process and its influence on friction; Annals of the CIRP, 46/1, 1977, p.175-178) zeigen, dass durch die Anwendung einer vordefinierten Oberflächenstruktur das tribologische Verhalten des Werkzeugs beeinflusst wird. Zur Prozessoptimierung bei schwer verformbaren Materialien wurden sogenannte "deterministic-stochastic structures" vorgeschlagen (Steinhoff, Rasp and Pawelski: Development of deterministic-stochastic surface structures to improve the tribological conditions of sheet forming processes; Journal of Materials Processing Technology 60, 1996, p. 355-361), welche hydrostatische "Schmier-Taschen" bilden. Obwohl die Herstellung tribologisch optimierter Oberflächenstrukturen *per se* bekannt war, blieb deren praktische Ausgestaltung im Bereich theoretischer Untersuchungen (Steinhoff, Bünten, Rasp, Kopp and Pawelski: Development of a model for the simulation of the transfer of surface structure in the temper-rolling process; Steel Research 66, 1995, No. 12, p. 520-525) und experimenteller Untersuchungen (Steinhoff, Rasp und Pawelski: Entwicklung von tribologisch optimierten Oberflächenstrukturen für die Blech- und Massivumformung, Sonderdruck aus Tribologie und Schmiertechnik 45, 2/1988).

Es ist daher Aufgabe der vorliegenden Erfindung Wege aufzuzeigen, um die bisherigen Untersuchungsergebnisse in die Praxis umzusetzen und gleichzeitig die Nachteile der einleitend aufgezeigten Verfahren in wirtschaftlicher Weise zu beheben bzw. zu vermeiden.

Es gilt somit den Verschleiss an hochbeanspruchten Oberflächen zu reduzieren und/oder die Zuverlässigkeit und Standzeit von Verschleissteilen, insbesondere von Umformwerkzeugen zu erhöhen. Dies soll in wirtschaftlich günstiger Weise geschehen, ohne dass wesentliche Änderungen bei an sich bewährten Konstruktionsprinzipien oder an eingeführten dimensionellen Auslegungen, nötig sind.

Im weiteren soll der Erfindungsgegenstand verbesserte tribologische Bedingungen schaffen, bzw. es sollen damit dreidimensionale Strukturen geschaffen werden, welche eine präzise Einstellung des Schmierspaltes gewährleisten und eine hydrodynamische Schmierung ermöglichen oder zumindest die Voraussetzung dafür sind.

Ebenfalls sollen Strukturen mit Notlaufeigenschaften realisierbar sein und/oder ein nicht zulässiger Verschleisszustand soll anzeigbar werden.

Die dreidimensionale Oberflächenstruktur soll in sämtlichen wünschbaren geometrischen Formen zur Einlagerung von Zwischenmedien geeignet sein und nur wenig von der Makrogeometrie des Werkstücks oder Werkzeugs abhängen.

Diese Aufgabe wird durch die Merkmale des Anspruchs 1 gelöst.

Die im Anspruch 1 genannte bogenförmig begrenzte Mikrostruktur lässt sich in ihrer Projektion im wesentlichen durch Polynome zweiten Grades, mit zwei Variablen beschreiben und begrenzt in praxi Kreis- oder Ellipsenflächen. Wesentlich ist dabei, dass die Begrenzungsflächen keine scharfen Kanten aufweisen, die zu extremen Belastungen führen und vorzeitig verschleissen.

Das partielle Aufschmelzen bewirkt ein begrenztes, lokales Umschmelzen der Werkstück- oder Werkzeugoberfläche, was die Werkstoffstruktur verändert, nicht aber deren geometrische Struktur, so dass ein gewollter lokaler Gradient der Werkstoffeigenschaften resultiert. Dieser Gradient lässt sich in weiten Grenzen durch die gewählte thermische Behandlung vorbestimmen.

Durch die gezielte Wahl des Rasters bzw. die gezielte Anordnung von Mikrostrukturen auf der Werkstück-Oberfläche resultieren Kontaktflächen die bei Belastung durch ein Gegenstück, wie Auflage, Gleitfläche, Rolle etc. eine kontrollierbare Oberflächenstrukturierung bewirken und selbstformend (engl. self forming structures) sind.

Zur Bildung von Mikrostrukturen genügen kleine Bereiche; sie finden ihre zweckmässige Grenze in den im Anspruch 1 aufgeführten Angaben.

Eine Selbstformung als dynamisches Gestaltungsprinzip für mechanisch beanspruchte Oberflächen basiert auf einer indirekten Strukturierung der Werkstückoberfläche nach der Erzeugung einer definierten, erfindungsgemässen Oberflächenstruktur durch in praxi resultierende Verschleissmechanismen.- Es erfolgt somit eine Strukturevolution *in situ*.

Durch das Umschmelzen resultiert eine thermische Implantation, dabei wird die Oberfläche des Werkstücks lokal begrenzt in dessen Werkstoffstruktur verändert. Die geometrische Makrostruktur des Werkstücks bleibt vollständig erhalten.

Der Gradient dieser thermischen Behandlung lässt sich durch Verfahren nach den abhängigen Ansprüchen in weiten Grenzen beeinflussen. Die Geometrie der einzelnen Bearbeitungspunkte sowie deren geometrische Anordnung kann dabei dem spezifischen makroskopischen Beanspruchungsprofil der Verwendung und/oder an den nachfolgenden Prozessen angepasst werden.

Die Selbstformung basiert auf dem lokal unterschiedlichen tribologischen Verhalten von auf einander reibenden Werkstücken und ist die Folge der gezielt eingebrachten Gradienten der Werkstoffeigenschaften.

In einer ersten Phase dieser Evolution der Selbstformung sind die Reibungsbedingungen über die gesamte kontaktierte Oberfläche nahezu gleich. Der bei der Belastung resultierende Verschleiss ist demgegenüber, aufgrund der Werkstoff-Gradienten, verschieden, so dass der Oberflächenabtrag eine geometrische Oberflächenstruktur entstehen lässt, welche ein tribologisches System - zusammen mit den eingelagerten Schmierstoffen und dem Abrieb - bildet.

Bereiche höherer Verschleissfestigkeit sind folglich erhaben; es bilden sich Kontaktflächen mit dem Gegenstück, während die vertieften Stellen als hydrostatische Schmiertaschen dienen.

Bei der Bildung dieser Struktur ändern sich in einer, nächsten Phase, einer Übergangsphase, nicht nur die lokalen Reibungsbedingungen, sondern auch die lokalen Verschleissmechanismen. Im Bereich der kontaktierten Oberflächen führt ein hoher Anteil an Festkörper- und Grenzreibung zu einem vorwiegend abrasiven und adhäsiven Verschleiss, während in den wachsenden, vertieften Oberflächenbereichen, aufgrund ihrer hydrodynamischen Bedingungen, tribo-chemische Auswascheffekte vorherrschen.

In einer anschliessenden funktionellen Phase führen die lokal unterschiedlichen Werkstoffeigenschaften, die lokalen Geometrieunterschiede und die tribologischen Gradienten zu einer gleichmässigen Weiterentwicklung der Oberflächenstruktur im Sinne eines angestrebten, homogenisierten Prozessverlaufs.

Während die laterale Ausdehnung aus Stabilitätsgründen Abmessungen in der Grössenordnung von einigen hundert Mikrometern aufweist, ist, zur Vermeidung von "Verzahnungseffekten", die vertikale Ausdehnung der erfindungsgemässen Struktur im Bereich von Nanometern anzustreben.

Gleiche Mechanismen wie bei massiven Gegenstücken, wie Auflagen, Gleitflächen, Rollen etc. lassen sich auch mit strömenden Medien beobachten.

Eine Beschichtung mit einem Material gemäss dem Anspruch 1 erlaubt das gezielte Implantieren von Zusatzwerkstoffen, auf der Basis eines Legierens, eines Beschichtens und eines Dispergierens mit dem Grundwerkstoff. Selbstverständlich können mit geeigneten Materialien und Strahlungsquellen auch Kombinationen dieser Verfahren realisiert werden. Die Beschichtungsmethode ist in der Serienfabrikation günstig, sie lässt sich an beliebig grossen Werkstücken anwenden, ist aber auch bei Reparaturen einsetzbar.

In Verbindung mit anderen Plattierungen kann das Verfahren ebenfalls vorteilhaft sein, insbesondere dann, wenn ohnehin Nachbearbeitungen der Werkstückoberfläche vorgesehen sind.

Eine Pulverzufuhr während des Aufschmelzvorgangs, kann mit Betriebsmitteln wie sie bereits vom sogenannten Randzonenschmelzen bekannt sind, vorgenommen werden.

In den meisten Fällen genügt ein Aufschmelzen der Oberfläche unter Werkstattbedingungen, da bei angemessenen Strahlungsleistungen kaum störende Oxydationen stattfinden.

Vorteilhafterweise werden zur Erzeugung der Mikrostrukturen Strahlungsquellen benutzt, die Laser-, Elektronen- oder Ionenstrahlung emittieren. Besonders bewährt hat sich in der Praxis ein handelsüblicher Nd:YAG-Laser.

In nachfolgend diskutierten, abhängigen Ansprüchen sind vorteilhafte Weiterbildungen des Erfindungsgegenstands beschrieben.

Bei empfindlichen Materialien und insbesondere wenn keine Nachbearbeitung vorgesehen ist, können ein Vakuum oder eine Schutzgasatmosphäre eine verbesserte Mikrostruktur gewährleisten; vgl. Ansprüche 2 und 3.

Eine erhöhte Temperatur gemäss Anspruch 4 kann aus fertigungstechnischen Gründen vorteilhaft sein.

Zur Unterstützung und Abkürzung des Selbstformungseffekts können an sich bekannte Mikrostrukturen durch Fotolitographie, Ätzen etc. hergestellt, dienen; Anspruch 5.

Als Folge des Abriebs und hydromechanischer Auswaschungseffekte erfolgt die Selbstformung nach Anspruch 6 durch den Gebrauch, d.h. die Belastung durch das übliche Gegenstück, beispielsweise durch das umzuformende Material in einem Zieh- oder Presswerkzeug.- Diese Feinstrukturierung erfolgt im Mikrobereich, idealerweise sogar im Nanometerbereich und erhöht die Standzeit der Werkzeuge um ein mehrfaches.

Ebenfalls kann der Selbstformungseffekt durch einen Materien-Strahl abgekürzt werden, Anspruch 7; im einfachsten Fall vor der ersten Belastung durch notorisch bekanntes Sandstrahlen.

Anspruch 8 beschreibt eine die Oberfläche überragende, tragende Struktur, welche vorteilhafterweise aus einem relativ harten Material besteht und die Kontaktierung mit einem Gegenstück, an definierten, hochbelasteten Stellen aufrecht hält.

Im Gegensatz zum vorerwähnten dienen das Werkstück nicht überragende Mikrostrukturen der üblichen Verschleissminderung, Anspruch 9, ggf. mit gegenüber dem Grundmaterial verbesserten Schmiereigenschaften bzw. als Einlagerungsstellen für Schmierstoffe, nach Art der Sinterwerkstoffe.

Die einfache Vorbestimmung der Härte der Mikrostruktur gemäss den Ansprüchen 10 und 11, erlaubt eine zusätzliche anwendungsspezifische Ausgestaltung des Erfindungsgegenstands.

Die Lehre nach Anspruch 12 trägt dem präsumtiven Abnutzungsverhalten des Werkstücks Rechnung.

Die Materialwahl nach Anspruch 13 lässt durch Sensoren im Schmiermittelkreislauf eine laufende Überwachung der Abnutzung zu und kann damit vorgesehene Serviceintervalle verlängern sowie gleichzeitig die Sicherheit komplexer und wichtiger Systeme erhöhen.- In analoger Weise können Hilfsstoffe freigesetzt werden, die sich im Feinstrukturbereich des tribologischen Systems anlagern.

Das Verfahren nach Anspruch 14 dient der Selbstformung von Teilen und erhöht deren Lebensdauer bzw. Standzeit ganz beträchtlich.

Wahrend das Verfahren nach Anspruch 14 auf überhöhte Implantationen ausgerichtet ist, bezieht sich Anspruch 15 auf tiefer liegende Mikrostrukturen. Die entstehenden isolierten Vertiefungen in der Oberfläche dienen einerseits als Reserve für Schmierstoffe, anderseits zum Auffangen von Oberflächenabrieb.

Der verfahrensmässige Zwischenschritt nach Anspruch 16 reduziert die Periode der Übergangsphase und dient der Optimierung der funktionellen Phase.

Die Ansprüche 17 und 18 beziehen sich auf bevorzugte Anwendungsfälle des Verfahrens.

Von besonderer wirtschaftlicher Bedeutung ist die Selbstformung nach Anspruch 19 in ihrer Anwendung bei Umformprozessen.

Günstig wirkt sich die Feinstrukturierung auch in Prägewerkzeugen etc. aus, da sie bei geeigneter Schmierung, eine hydrostatische Lagerung der Werkzeugteile gegenüber dem Pressling ermöglicht, Anspruch 20.

Die Steuerung und Beeinflussung von Randschichten in Strömungen, insbesondere bei hohen Drucken und/oder grossen Geschwindigkeiten eröffnet der Präzisionshydraulik neue Möglichkeiten, vgl. Anspruch 21.

An Hand von Zeichnungen werden nachfolgend erprobte Einlagerungen von Mikrostrukturen in Werkstückoberflächen näher erläutert.

Es zeigen:
- Fig. 1a: eine charakteristische, erhabene (positive) Einlagerungsgeometrie,
- Fig. 1b: eine charakteristische, konkave (negative) Einlagerungsgeometrie,
- Fig. 2: ein mit Titankarbid beschichtetes Werkstück, in einer seitlichen, vergrösserten Draufsicht, vor der thermischen Behandlung,
- Fig. 3: die vergrösserte, 3-dimensionale Topographie einer Einschmelzzone, nach einer Selbstformung,
- Fig. 4: die Oberfläche der Einschmelzone nach Fig. 3,
- Fig. 5: einen Querschliff durch die Einschmelzone nach Fig. 3 und
- Fig. 6: eine REM-Aufnahme einer Werkstückoberfläche mit Mikrokontaktflächen nach dem Sandstrahlen.

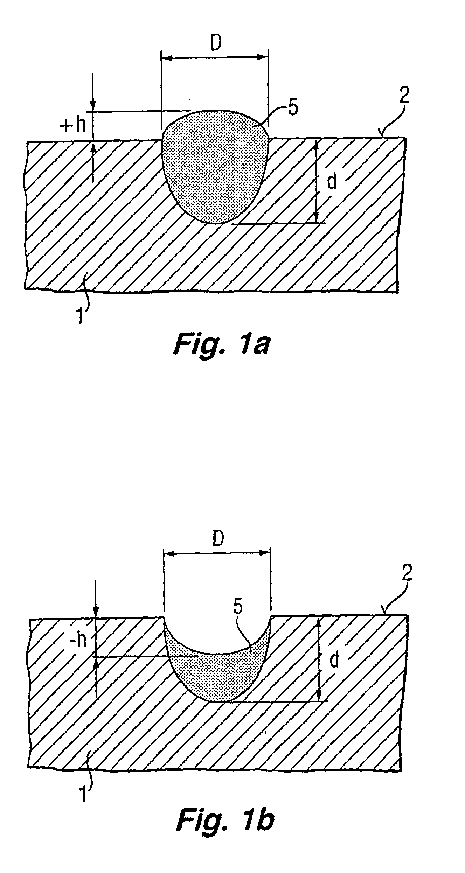

In Prinzipdarstellungen Fig. 1a und Fig 1b sind mit 1 übliche Werkstücke angedeutet, in deren Oberfläche 2 auf thermischem Wege Einlagerungen 5 implantiert sind.

Der grösste Durchmesser D beider Einlagerungen 5 beträgt 300 µm, während die Überhöhung +h in Fig. 1a zirka 50 µm und die Vertiefung -h in Fig. 1b ebenfalls zirka 50 µm beträgt. Die Einlagerung 5 in Fig. 1a reicht in eine Tiefe d von 400 µm und diejenige in Fig. 1b in eine solche von 100 µm.

Während die Einlagerungsgeometrien nach Fig. 1a und 1b charakteristisch sind, sind die Abmessungen atypisch. Die Einlagerungen 5 sind hier relativ gross, um deren Untersuchung zu erleichtern. Es wird davon ausgegangen, dass Einlagerungen von weniger als 500 µm² Fläche, gemessen in der Projektion auf die Oberfläche des Werkstücks genügen, um die gewünschten Umschmelzungen bzw. Legierungen und/oder Dispersionen herzustellen.

Das Werkstück 1 selbst kann beliebig sein, in einer Versuchsreihe wurden übliche Werkzeugstähle, Stahllegierungen, Kupferlegierungen, Aluminiumlegierungen, Titanlegierungen und Kunststoffe auf ihre Eignung zur punktuellen thermischen Einlagerung von Zusatzstoffen mittels eines Laserstrahls untersucht und als geeignet befunden.

Verwendet wurde ein handelsüblicher Laser mit einer mittleren Leistung von 10 W, einer Pulslänge von 2,5 ms, mit einer Pulsenergie von 1,0 J. Der Brennpunkt des Lasers wurde auf die Oberfläche des Werkstücks eingestellt; es wurde N₂ als Schutzgas bei einem Druck von 0,2 bar zugeführt.

In den weiteren Figuren sind für gleiche Funktionsteile gleiche Bezugszeichen verwendet.

Die Werkstücke (Proben) wurden vor der Laserbearbeitung mit TiC Körnern < 6 µm in einer Schichtdicke von 110 µm belegt und zwar durch einen Schlicker auf organischer Basis, der nach dem Auftrag bei 200 °C während 1 h im Ofen getrocknet wurde.

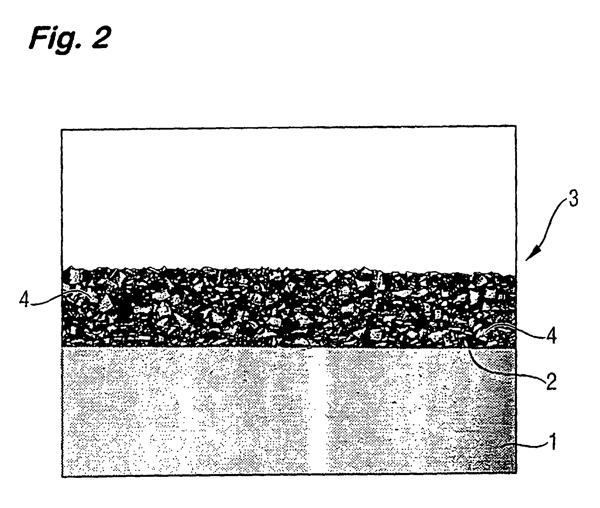

Figur 2 zeigt den Schlicker in Form einer Beschichtung 3 in vergrösserter Darstellung nach dem Trocknen.

Nach der Laserbearbeitung wurden die Proben in notorisch bekannter Weise angelassen, wobei die Haltezeit jeweils 3 h betrug.

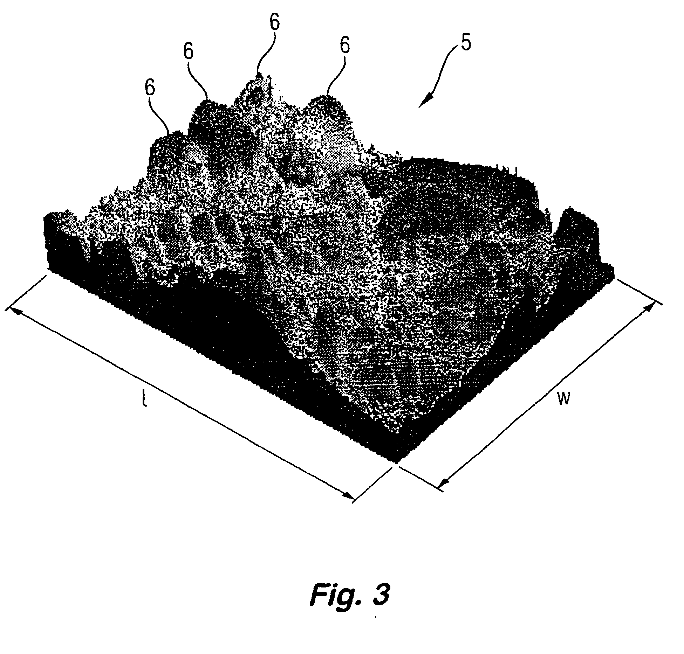

Die Oberfläche der Einlagerungen 5 ist auch nach einer Selbstformung durch ein Gegenstück nicht flach; vgl. Topographie in Fig. 3 (3D-Interferometerdarstellung). Die maximale Überhöhung an den Spitzen 6, gemessen von der Oberfläche des Werkstücks, liegt im Bereich von 50 bis 60 nm. Die Länge 1 der Probe beträgt 60 nm, deren Breite w ist 45 µm.

Es ist angezeigt, die Oberflächen dieser Implantationen fein zu Schleifen bevor sie eingesetzt werden, um dem Selbstformungsvorgang ohne Verzögerung zu starten.

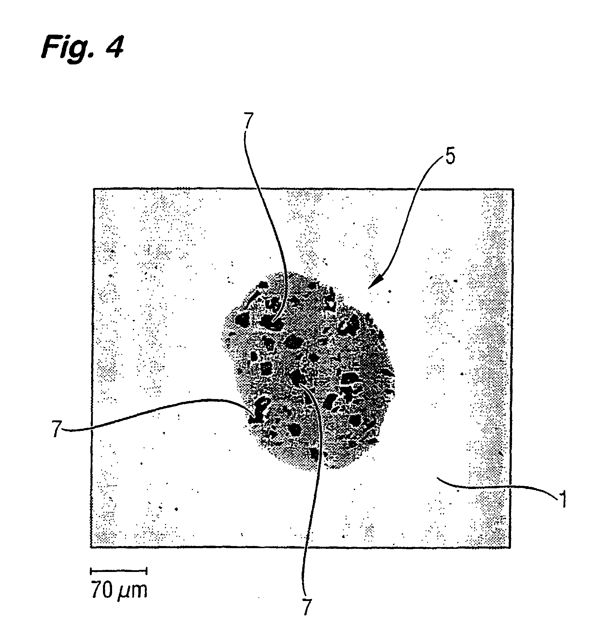

Die Oberfläche einer Einschmelzone, nach einem üblichen mechanischem Schleifen mit einer Körnung von P4000, zeigt Fig. 4, wo deutlich die resultierende Einlagerungsgeometrie der Karbide (= dunkle Bereiche) zu sehen ist. Zu Vergleichszwecken wurde eine Strecke von 70 µm eingezeichnet.

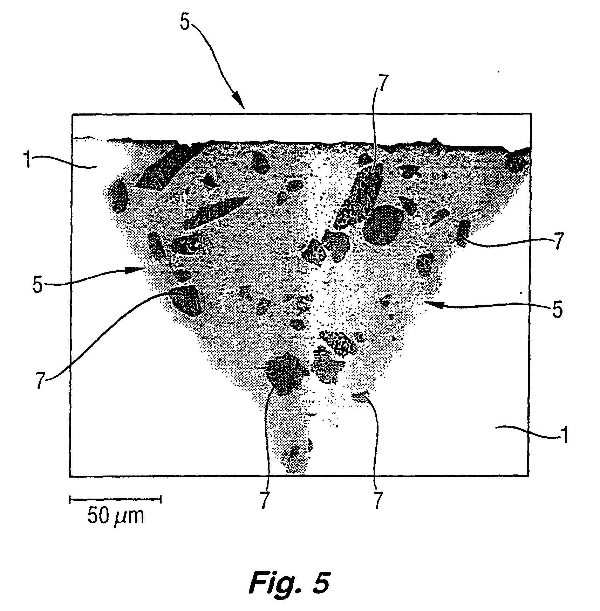

Aus dem Querschliff Fig. 5 ist ersichtlich, dass sich die Karbide 7 auch in der vertikalen z-Achse in der ganzen Einschmelzone verteilen, hier ist die Vergleichsstrecke von 50 µm eingetragen.

Es hat sich gezeigt, das die besten Einschmelzzonenprofile bei einer Fokuslage des Lasers erzielt wird, welche einige µm über der Werkstückoberfläche liegt.

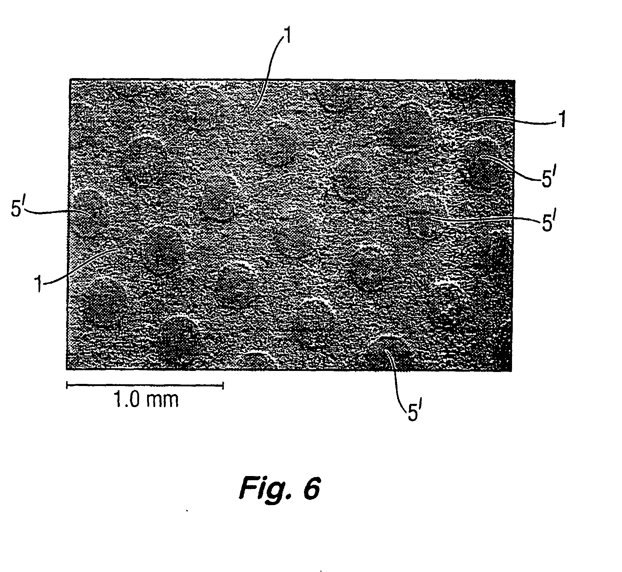

Um die Struktur der Werkstückoberfläche herauszuheben wurde diese einer Sandstrahlung unterzogen: Fig. 6 ist eine entsprechende Rasterelektronenmikroskop-Aufnahme. Die eingezeichnete Vergleichsstrecke beträgt 1.0 mm; die Matrix, das Werkstück 1, besteht aus üblichem ungehärtetem Kaltarbeitsstahl 1.2601. Die vor dem Einschmelzen mit dem Laser aufgebrachte Schicht aus TiC-Körnern < 6 µm betrug 110 µm. Die hier abgeplatteten, vor dem Sandstrahlen geschliffenen Einlagerungen sind mit 5' bezeichnet.

Der Erfindungsgegenstand lässt eine sehr grosse Anzahl von Anwendungen und Werkstoffkombinationen zu. Die nachfolgende Tabelle ist daher lediglich eine Auswahl aus einer Vielzahl von Möglichkeiten, wobei oft zusätzlich auf dem gleichen Werkstück noch zueinander unterschiedliche Werkstoffe und Einlagerungsgeometrien denkbar und sinnvoll sind.

Dabei bedeuten:

### Werkstück (Substrat)

- A1: Werkzeugstähle
- A2: Stahllegierung
- A3: Kupferlegierung
- A4: Aluminiumlegierung
- A5: Titanlegierung
- A6: Kunststoff

### Vorbeschichtung

- **B1**: Organischer Binder mit der folgenden Zusammensetzung:
TiC: 69,2 Gew.- %, Korngrösse < 20 µm
Ethanol: 21,5 Gew.- %
Polyäthylenglycol: 2,9 Gew.- %
Phthalsäure: 2,9 Gew.- %
Polyvinylbutanal : 2, 0 Gew - %
Triolein: 1,5 Gew.- %
Entgasen: Der Binder wird im Ofen bei 200°C , während 1 h, getrocknet
Abdecken: Bohrungen etc. können mit Klebeband abgedeckt werden.
Schichtdicke: ca. 100 µm
- **B2**: Klebeband mit zusatzwerkstoffen: Beschichtungen an grossen, sperrigen Teilen
Entgasen des Klebebands

### Einlagerungswerkstoff

- **C1**: TiC, WC, VC, ZrC, Mo₂C, Cr₃C₂
- **C2**: Nitride: TiN, BN, AlN, Si₃N₄
Boride: TiB, TiB₂
Oxide: Al₂O₃, ZrO₂
Karbide: TiC, SiC, WC, VC, ZrC, Mo₂C, Cr₃C₂, Diamant
- **C3**: Cr, Sn (Kupfer legieren)
- **C4**: Ni, Cr, Ti, B, NiCrBSi (Al legieren)
- **C5**: SiC, MoSi₂, Co (Titan legieren)
- **C6**: PTFE; C, SiO

### Einlagerungsgeometrie

| | |
|---|---|
| Positiv: analog Fig. 1a Negativ: analog Fig. 1b | |
| D1 | h = +50 µm |
| D2 | h ∼ 0 µm |
| D3 | h > 50 µm |
| D4 | h < 0 µm |

### Nachbearbeitung

- E1: mechanisches Polieren
- E2: chemische Ätzung
- E3: elektrolytisches Polieren
- E4: Strahlung: Sandstrahlung, Ionenstrahlung, Elektronenstrahlung

Die nachstehende Tabelle Anwendungsübersicht demonstriert die Universalität des Erfindungsgegenstands.

Abschliessend sei festgestellt, dass die vorliegende Erfindung durch die indirekte Strukturierung von Werkstückoberflächen eine in situ Selbstformung sowie eine ebenfalls mögliche Vordefinition des Gestaltungsprinzips erlaubt. Dies führt in praxi zu prozess- und anwendungsoptimierten dynamischen Gestaltungsprizipien mit reduzierten Spannungsspitzen und zu technologisch besser beherrschbaren Konstruktionen. Durch die Anwendung der an sich bekannten Methoden finiter Elemente lassen sich die Bereiche hoher Belastung berechnen und daraus der jeweils optimale "Layout" der entsprechenden Implementationen bestimmen.

Anzustreben sind, auch aus wirtschaftlichen Gründen möglichst kleine zusammenhängende Bereiche insularer Implantationen.

Von besonderem Interesse sind auch denkbare Kombinationen zwischen Kunststoffen und metallischen Mikrostrukturen bzw. vice versa.

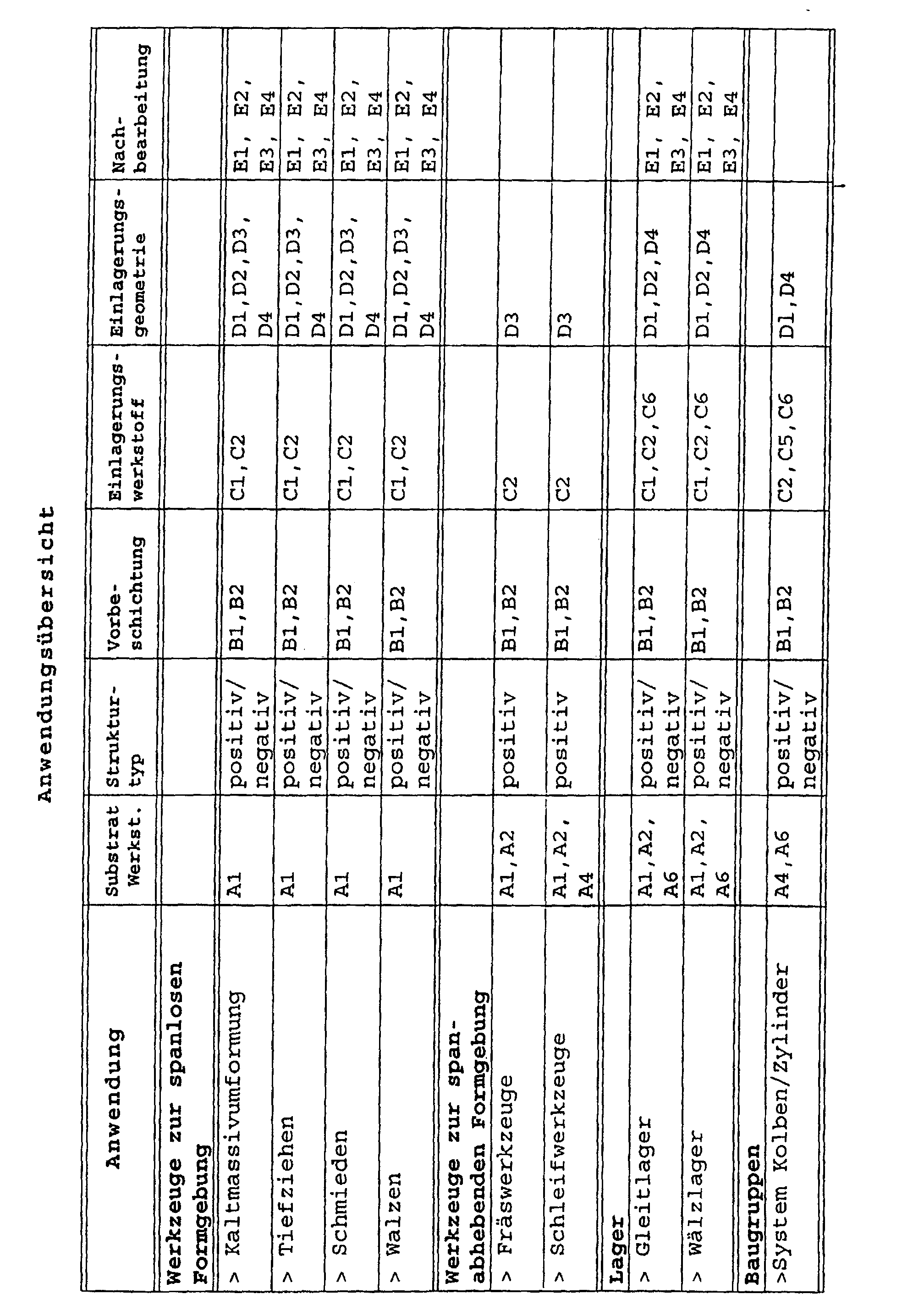

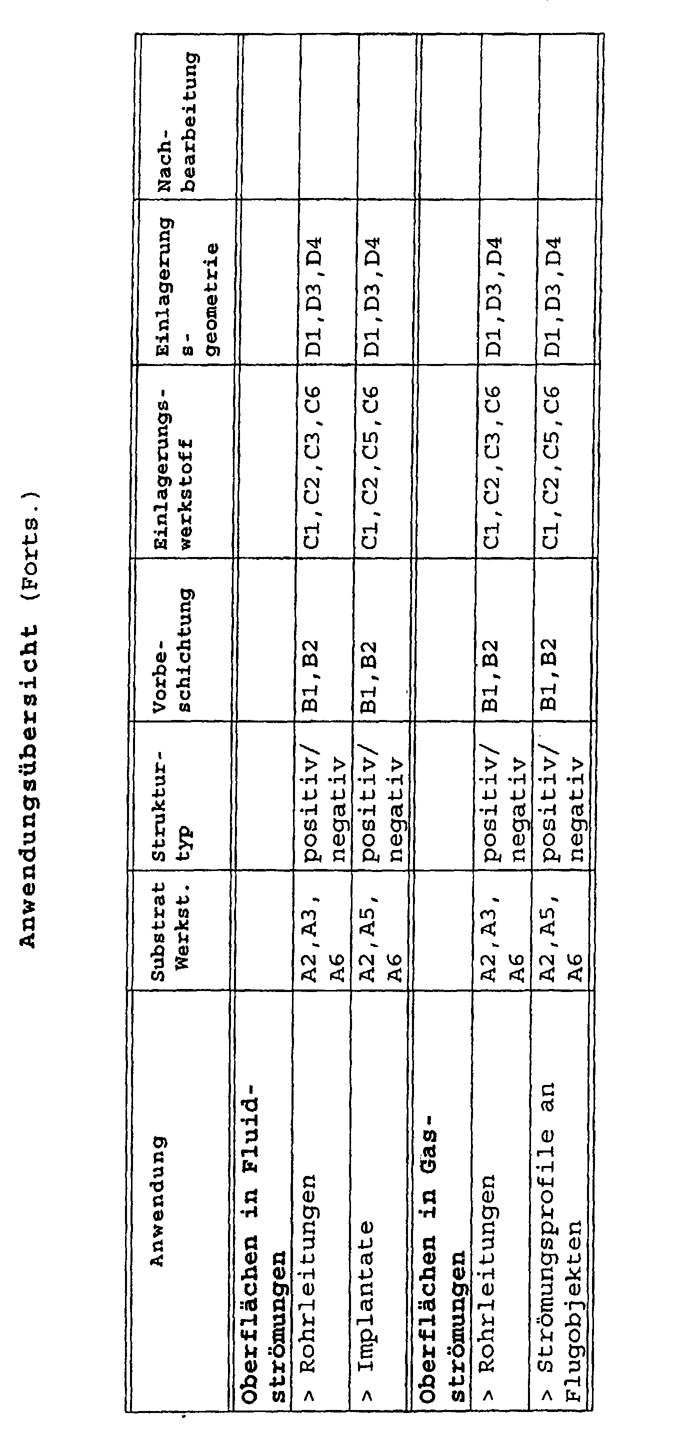

## Patentansprüche

1. Verfahren zur gezielten partiellen Änderung der physikalischen und/oder technischen Eigenschaften von Werkstück-Oberflächen durch deren lokales thermisches Aufschmelzen, Zulegieren und/oder Dispergieren eines Zusatzwerkstoffes mittels einer punktuell wirkenden, konzentrischen Strahlungsquelle, wobei die Werkstück-Oberfläche partiell und insular auf einer zusammenhängenden Fläche von weniger als 1,0 mm² und mit einer Tiefe von weniger als 500 µm aufgeschmolzen wird, die bogenförmig begrenzte Mikrostruktur der Oberfläche in einem der vorgesehenen Belastung des Werkstücks angepassten Raster auf der weiteren Werkstück-Oberfläche wiederholt wird und die Oberfläche des Werkstücks, vor dem Aufschmelzen mit der Strahlungsquelle, mit einem pulverförmigen Material mit gegenüber dem Material des Werkstücks unterschiedlichen physikalischen und/oder technischen und/oder chemischen Eigenschaften beschichtet wird, und wobei das pulverförmige Material durch ein Klebband auf der Werkstück-Oberfläche fixiert wird oder als Schlicker auf organischer Basis, auf die Oberfläche aufgebracht, bzw. in welchem die zu bearbeitende Oberfläche eingetaucht und anschliessend getrocknet wird.

2. Verfahren nach Anspruch 1, **dadurch gekennzeichnet, dass** die Aufschmelzung der Oberfläche in einem Vakuum, durchgeführt wird.

3. Verfahren nach einem der Ansprüche 1 oder 2, **dadurch gekennzeichnet, dass** die Aufschmelzung der Oberfläche in einer inerten Gasatmosphäre, durchgeführt wird.

4. Verfahren nach einem der Ansprüche 1 bis 3, **dadurch gekennzeichnet, dass** die Aufschmelzung der Oberfläche bei gegenüber Raumtemperatur erhöhter Temperatur durchgeführt wird.

5. Verfahren nach Anspruch 1, **dadurch gekennzeichnet, dass** in einem getrennten Arbeitsschritt die Umgebung der insularen Mikrostruktur mit Mikrokanälen versehen wird.

6. Verfahren nach Anspruch 5, **dadurch gekennzeichnet, dass** die Bildung der Mikrokanäle zumindest teilweise durch eine Selbstformung, bei der Belastung durch ein auf dem Werkstück aufliegenden Gegenstück, vorgenommen wird.

7. Verfahren nach Anspruch 5, **dadurch gekennzeichnet, dass** die Bildung der Mikrokanäle zumindest teilweise durch eine Selbstformung, vorgängig unterstützt durch einen Materien-Strahl, vorgenommen wird.

8. Verfahren nach Anspruch 1, **dadurch gekennzeichnet, dass** das aufgebrachte Material in seiner Masse derart gewählt ist, dass dieses nach dem Aufschmelzen, mit der sich bildenden Mikrostruktur die Oberfläche des Werkstücks überragt.

9. Verfahren nach Anspruch 1, **dadurch gekennzeichnet, dass** das aufgebrachte Material in seiner Masse derart gewählt ist, dass dieses nach dem Aufschmelzen, mit der sich bildenden Mikrostruktur die Oberfläche des Werkstücks nicht überragt.

10. Verfahren nach Anspruch 1, **dadurch gekennzeichnet, dass** das aufgebrachte Material eine Härte aufweist, die im geschmolzenen Zustand höher ist als die Härte des Grundmaterial des Werkstücks.

11. Verfahren nach Anspruch 1, **dadurch gekennzeichnet, dass** das aufgebrachte Material eine Härte aufweist, die im geschmolzenen Zustand geringer ist als die Härte des Grundmaterial des Werkstücks.

12. Verfahren nach Anspruch 1, **dadurch gekennzeichnet, dass** das aufgebrachte Material im geschmolzenen Zustand eine zum Grundmaterial des Werkstücks verschiedene Verschleissfestigkeit aufweist.

13. Verfahren nach Anspruch 1, **dadurch gekennzeichnet, dass** das aufgebrachte Material im geschmolzenen Zustand in seiner Dichte, seiner Absorption, seiner ferromagnetischen Eigenschaft, seiner elektromagnetischen Strahlung, seiner Farbe und/oder seinem Reflektionsgrad zum Grundmaterial des Werkstücks verschieden ist.

14. Verfahren nach wenigstens einem der Ansprüche 1 bis 13, zur Optimierung der Belastbarkeit von miteinander formschlüssig verbundenen Werkstücken und/oder Werkzeugen und/oder Formteilen, **dadurch gekennzeichnet, dass** nach der thermischen Implantation das Werkstück, in Arbeitslage mit seinem Gegenstück in Verbindung gebracht wird, dass sich unter einem Einbezug verstärkter Schmierung die beiden Teile, unter Arbeitsbelastung miteinander ein tribologisches System bildend, in ihrem Oberflächen im Nanometerbereich selbstformen.

15. Verfahren nach wenigstens einem der Ansprüche 1 bis 13, zur Optimierung der Belastbarkeit von miteinander formschlüssig verbundenen Werkstücken und/oder Werkzeugen und/oder Formteilen, **dadurch gekennzeichnet, dass** nach der thermischen Implantation eines das Werkstück überragenden Zusatzwerkstoffes zumindest die Spitzen der Überhöhungen mechanisch oder thermisch abgetragen werden, dass in einem weiteren Verfahrensschritt das Werkstück, in Arbeitslage mit seinem Gegenstück in Verbindung gebracht wird, dass sich unter einem Einbezug verstärkter Schmierung die beiden Teile, unter Arbeitsbelastung, miteinander ein tribologisches System bildend, in ihrer Oberflächen im Nanometerbereich selbstformen.

16. Verfahren nach Anspruch 14 oder 15, **dadurch gekennzeichnet, dass** die Werkstücke vor ihrem ersten betriebsmässigen Einsatz einer Strahlbehandlung und/oder Wärmebehandlungen unterzogen werden, um ihre Oberflächen im Mikrometerbereich aneinander anzupassen.

17. Anwendung des Verfahrens nach wenigstens einem der Ansprüche 1 bis 16 zur Indikation des Abnutzungsgrades von Laufflächen.

18. Anwendung des Verfahrens nach wenigstens einem der Ansprüche 1 bis 16 zur Implantation von Materialien mit Notlaufeigenschaften in Laufflächen.

19. Anwendung des Verfahrens nach wenigstens einem der Ansprüche 1 bis 16 zur definierten Gestaltung von Reibflächen durch Selbstformung, insbesondere zur Selbstformung von Werkzeugoberflächen in Umformprozessen und von Gleitführungen in hochbeanspruchten Bauteilen.

20. Anwendung des Verfahrens nach wenigstens einem der Ansprüche 1 bis 16 zur Strukturierung von Prägewerkzeugen.

21. Anwendung des Verfahrens nach wenigstens einem der Ansprüche 1 bis 16 zur Beeinflussung und Lenkung von strömenden Medien in ihren Randzonen.

## Claims

1. Method for the specific partial changing of the physical and/or technical properties of the surfaces of work pieces by local thermal re-melting thereof, addition-alloying and/or dispersal of a filler material by means of a spot-acting concentric radiation source, wherein the work piece surface is partially and insularly re-melted to a cohesive area of less than 1.0 mm² and having a depth of less than 500 µm, the arcuately bounded microstructure of the surface is repeated in a grid on the further surface of the work piece matched to the rated load of the work piece, and the surface of the work piece, prior to re-melting with the radiation source, is coated with a pulverulent material having different physical and/or technical and/or chemical properties from the material of the work piece, and wherein the pulverulent material is fixed by an adhesive tape to the work piece surface or is applied as slip on an organic base to the surface, or the surface to be treated is immersed therein and subsequently dried.

2. Method according to claim 1, **characterised in that** re-melting of the surface is carried out in a vacuum.

3. Method according to one of claims 1 and 2, **characterised in that** re-melting of the surface is carried out under an inert gas atmosphere.

4. Method according to one of claims 1 to 3, **characterised in that** re-melting of the surface is carried out at a temperature greater than room temperature.

5. Method according to claim 1, **characterised in that** in a separate working step the surrounding area of the insular microstructure is provided with micro-channels.

6. Method according to claim 5, **characterised in that** the formation of the micro-channels is carried out at least partly by a self-forming process, under loading by a counterpart lying on the work piece.

7. Method according to claim 5, **characterised in that** the formation of the micro-channels is carried out at least partly by a self-forming, the process being assisted by preceding use of a beam of matter.

8. Method according to claim 1, **characterised in that** the mass of the applied material is selected such that after the re-melting it projects with the developing microstructure beyond the surface of the work piece.

9. Method according to claim 1, **characterised in that** the mass of the applied material is selected such that after the re-melting it does not project with the developing microstructure beyond the surface of the work piece.

10. Method according to claim 1, **characterised in that** the applied material has a hardness that in the molten state is higher than the hardness of the base material of the work piece.

11. Method according to claim 1, **characterised in that** the applied material has a hardness that in the molten state is lower than the hardness of the base material of the work piece.

12. Method according to claim 1, **characterised in that** in its molten state the applied material has a wear resistance different from that of the base material of the work piece.

13. Method according to claim 1, **characterised in that** in its molten state the applied material is different in its density, its absorption, its ferromagnetic property, its electromagnetic radiation, its colour and/or its degree of reflection from the base material of the work piece.

14. Method according to at least one of claims 1 to 13 for optimising the stability under load of work pieces and/or tools and/or shaped parts joined to one another with a positive fit, **characterised in that** after the thermal implantation the work piece is brought in the working position into connection with its counterpart, **in that** under increased lubrication the two parts, under working load with one another, self-form in their surfaces in the nanometre range, forming a tribological system.

15. Method according to at least one of claims 1 to 13 for optimising the stability under load of work pieces and/or tools and/or shaped parts joined to one another with a positive fit, **characterised in that** after the thermal implantation of a filler material projecting beyond the work piece at least the tips of the protrusions are mechanically or thermally abraded, **in that** in a further process step the work piece is brought in the working position into connection with its counterpart, **in that** under increased lubrication the two parts under working load with one another self-form in their surfaces in the nanometre range, forming a tribological system.

16. Method according to claim 14 or 15, **characterised in that** prior to being used for the first time, the work pieces are subjected to a beam treatment and/or heat treatment in order to match their surfaces to one another in the micrometre range.

17. Application of the method according to at least one of claims 1 to 16 for indication of the degree of wear of running surfaces.

18. Application of the method according to at least one of claims 1 to 16 for implantation of materials with emergency running properties in running surfaces.

19. Application of the method according to at least one of claims 1 to 16 for defined shaping of frictional surfaces by self forming, especially for self-forming of tool surfaces in re-forming processes and of slideways in components subject to high stresses.

20. Application of the method according to at least one of claims 1 to 16 for structuring of embossing tools.

21. Application of the method according to at least one of claims 1 to 16 for influencing and directing flowing media in their edge zones.

## Revendications

1. Procédé de modification partielle ciblée des caractéristiques physiques et/ou techniques de surfaces de pièces d'oeuvre par leur ouverture par fusion thermique locale, ajout par alliage et/ou dispersion d'un matériau additionnel au moyen d'une source de radiation concentrique agissant ponctuellement, dans lequel la surface de la pièce d'oeuvre est ouverte par fusion partiellement et localement sur une surface continue de moins de 1,0 mm² et d' une profondeur de moins de 500 µm, la microstructure limitée en forme d'arc de la surface est reproduite sur le reste de la surface de la pièce d'oeuvre, suivant un schéma adapté à la sollicitation prévue de la pièce d'oeuvre et la surface de la pièce d'oeuvre, avant l'ouverture par fusion avec la source de radiation, est revêtue d'une matière pulvérulente présentant des caractéristiques physiques et/ou techniques et/ou chimiques différentes de celles de la matière de la pièce d'oeuvre, et dans lequel la matière pulvérulente est fixée par un ruban adhésif à la surface de la pièce d'oeuvre ou est appliquée sur la surface sous forme de pâte à base organique, ou dans lequel la surface à travailler est immergée et consécutivement séchée.

2. Procédé selon la revendication 1, **caractérisé en ce que** l'ouverture par fusion de la surface est réalisée sous vide.

3. Procédé selon l'une des revendications 1 et 2, **caractérisé en ce que** l'ouverture par fusion de la surface est réalisée sous atmosphère de gaz inerte.

4. Procédé selon l'une des revendications 1 à 3, **caractérisé en ce que** l'ouverture par fusion de la surface est réalisée à une température accrue par rapport à la température ambiante.

5. Procédé selon la revendication 1, **caractérisé en ce que** dans une étape de travail séparée, l'environnement de la microstructure locale est pourvu de micro-canaux.

6. Procédé selon la revendication 5, **caractérisé en ce que** la formation des micro-canaux est entreprise au moins partiellement par un auto-formage, lors de la sollicitation par une contre-pièce en appui sur la pièce d'oeuvre.

7. Procédé selon la revendication 5, **caractérisé en ce que** la formation des micro-canaux est réalisée au moins partiellement par un auto-formage, préalablement soutenue par un jet de matière.

8. Procédé selon la revendication 1, **caractérisé en ce que** la matière appliquée est choisie dans sa masse de manière telle qu'après l'ouverture par fusion, celle-ci fait saillie de la surface de la pièce d'oeuvre avec la micro-structure se formant.

9. Procédé selon la revendication 1, **caractérisé en ce que** la matière appliquée est choisie dans sa masse de manière telle qu'après l'ouverture par fusion, celle-ci ne fait pas saillie de la surface de la pièce d'oeuvre avec la micro-structure se formant.

10. Procédé selon la revendication 1, **caractérisé en ce que** la matière appliquée présente une dureté qui, à l'état fondu, est supérieure à la dureté de la matière de base de la pièce d'oeuvre.

11. Procédé selon la revendication 1, **caractérisé en ce que** la matière appliquée présente une dureté qui, à l'état fondu, est inférieure à la dureté de la matière de base de la pièce d'oeuvre.

12. Procédé selon la revendication 1, **caractérisé en ce que** la matière appliquée présente, à l'état fondu, une résistance à l'usure différente de celle de la matière de base de la pièce d'oeuvre.

13. Procédé selon la revendication 1, **caractérisé en ce que** la matière appliquée, à l'état fondu, est différent de la matière de base de la pièce d'oeuvre, dans sa densité, son pouvoir d'absorption, sa caractéristique ferromagnétique, son rayonnement électromagnétique, sa couleur et/ou son degré de réflexion.

14. Procédé selon l'une des revendications 1 à 13, d'optimisation de la capacité de charge de pièces d'oeuvre et/ou d'outils et/ou de pièces moulées assemblés ensemble par correspondance de formes, **caractérisé en ce qu'**après l'implantation thermique, la pièce en position de travail est mise en liaison avec sa contre-pièce, **en ce qu'**en tenant compte d'une lubrification renforcée, les deux pièces formant ensemble un système tribologique sous une sollicitation de travail, s'auto-forment dans leur surface à l'échelle manométrique.

15. Procédé selon l'une des revendications 1 à 13, d'optimisation de la capacité de charge de pièces d'oeuvre et/ou d'outils et/ou de pièces moulées assemblées ensemble par correspondance des formes, **caractérisé en ce qu'**après l'implantation thermique d'un matériau additionnel saillant de la pièce d'oeuvre, au moins les crêtes des élévations sont érodées mécaniquement ou thermiquement, **en ce que** dans une autre étape de procédé, la pièce d'oeuvre en position de travail est mise en liaison avec sa contre-pièce, **en ce qu'**en tenant compte d'une lubrification renforcée, les deux pièces formant ensemble un système tribologique sous une sollicitation, s'auto-forment dans leur surface à l'échelle nanométrique.

16. Procédé selon la revendication 14 ou 15, **caractérisé en ce que** les pièces d'oeuvre avant leur première utilisation en service sont soumises à un traitement par irradiation et/ou à des traitements thermiques, pour adapter l'une à l'autre leurs surfaces à l'échelle micrométrique.

17. Application du procédé selon au moins l'une des revendications 1 à 16, pour indiquer le degré d'usure des surfaces de glissement.

18. Application du procédé selon au moins l'une des revendications 1 à 16, pour implanter dans des surfaces de glissement des matières présentant des caractéristiques de fonctionnement d'urgence.

19. Application du procédé selon au moins l'une des revendications 1 à 16 pour la configuration définie de surfaces de frottement par auto-formage, en particulier pour l'auto-formage de surfaces d'outils dans des procédés de déformation et de glissières dans des pièces hautement sollicitées.

20. Application du procédé selon au moins l'une des revendications 1 à 16 pour structurer des outils de matriçage.

21. Application du procédé selon au moins l'une des revendications 1 à 16 pour influencer et diriger des fluides circulant dans leurs zones marginales.
